# EUROPEAN PATENT APPLICATION

(11) **EP 4 704 118 A1**
(43) Date of publication of application: **04.03.2026**
(21) Application number: 23935434.3
(22) Date of filing: 19.10.2023
(51) Int. Cl.: H01B 7/32, H01B 11/22

(54) **POWER CABLE, POWER LINE, POWER CABLE ABNORMAL POINT DETECTION SYSTEM, AND POWER CABLE ABNORMAL POINT DETECTION METHOD**

(30) Priority: 28.04.2023 WO PCT/JP2023/016834
(71) Applicant: Sumitomo Electric Industries, Ltd., Osaka-shi, Osaka 541-0041 (JP)
(72) Inventor: SHIMOGUCHI, Takefumi, Osaka-shi, Osaka 541-0041 (JP); TANG, Jinglong, Osaka-shi, Osaka 541-0041 (JP); SATO, Akira, Osaka-shi, Osaka 541-0041 (JP); HASHIBA, Keiichi, Osaka-shi, Osaka 541-0041 (JP)
(74) Representative: Grünecker Patent- und Rechtsanwälte PartG mbB
(86) International application number: PCT/JP2023/037860
(87) International publication number: WO 2024/224661

(57) **Abstract**

A power cable includes: a cable body including a conductor, an insulating layer, a semiconductive layer, and a sheath; a first optical fiber that transmits sensing light; a second optical fiber that transmits backscattered light of the sensing light; an optical fiber that transmits first excitation light for amplifying the sensing light; an optical fiber that transmits second excitation light for amplifying the backscattered light; and at least one optical amplifier repeater that amplifies the sensing light with the first excitation light, and amplifies the backscattered light with the second excitation light.

## Description

### TECHNICAL FIELD

The present disclosure relates to a power cable, a power line, a power cable anomalous point detection system, and a power cable anomalous point detection method. The present application claims priority to International Application No. PCT/JP2023/016834 filed on April 28, 2023, the entire content of which is hereby incorporated by reference.

### BACKGROUND ART

Conventionally, a system is known which detects anomalies of a power cable, such as a ground fault accident, an external damage, or a fatigue. For example, Patent Literature 1 discloses a submarine cable composed of a power wire core, an armor having a two-layer structure, and a line sensor having an optical fiber. The optical fiber is used to measure a distortion change across the total length of the submarine cable by Pulse PrePump Brillouin Optical Time Domain Analysis (PPP-BOTDA). The power wire core corresponds to the cable body of the power cable.

### CITATION LIST

### PATENT LITERATUREE

PTL 1: Japanese Patent Laying-Open No. 2013-36876
PTL 2: WO2021/090644

### SUMMARY OF INVENTION

A power cable according to the present disclosure includes: a cable body including a conductor, an insulating layer, a semiconductive layer, and a sheath; a first optical fiber that transmits sensing light; a second optical fiber that transmits backscattered light of the sensing light; an optical fiber that transmits first excitation light for amplifying the sensing light; an optical fiber that transmits second excitation light for amplifying the backscattered light; and at least one optical amplifier repeater that amplifies the sensing light with the first excitation light, and amplifies the backscattered light with the second excitation light.

A power line according to the present disclosure includes a first power cable, a second power cable, and a connection connecting the first power cable and the second power cable. Each of the first power cable and the second power cable includes: a cable body including a conductor, an insulating layer, a semiconductive layer, and a sheath; a first optical fiber that transmits sensing light; a second optical fiber that transmits backscattered light of the sensing light; an optical fiber that transmits first excitation light for amplifying the sensing light; and an optical fiber that transmits second excitation light for amplifying the backscattered light. The connection includes an optical amplifier repeater that amplifies the sensing light with the first excitation light, and amplifies the backscattered light with the second excitation light.

A power cable anomalous point detection system according to the present disclosure includes: a power cable including: a cable body including a conductor, an insulating layer, a semiconductive layer, and a sheath; a first optical fiber that transmits sensing light; a second optical fiber that transmits backscattered light of the sensing light; an optical fiber that transmits first excitation light for amplifying the sensing light; and an optical fiber that transmits second excitation light for amplifying the backscattered light; a laser device that emits the sensing light; an excitation device that emits the first excitation light and the second excitation light; an optical amplifier repeater that amplifies the sensing light with the first excitation light, and amplifies the backscattered light with the second excitation light; and a measurement device that detects an anomalous point at the power cable, based on the backscattered light.

A power cable anomalous point detection method according to the present disclosure detects an anomalous point at a power cable, the power cable including: a cable body including a conductor, an insulating layer, a semiconductive layer, and a sheath; a first optical fiber that transmits sensing light; and a second optical fiber that transmits backscattered light of the sensing light. The power cable includes an optical fiber that transmits first excitation light for amplifying the sensing light, and an optical fiber that transmits second excitation light for amplifying the backscattered light. The power cable anomalous point detection method includes: emitting, by the excitation device, the first excitation light and the second excitation light; emitting, by the first laser device, the sensing light; amplifying, by the optical amplifier repeater, the sensing light with the first excitation light; amplifying, by the optical amplifier repeater, the backscattered light with the second excitation light; and detecting, by the measurement device, the anomalous point at the power cable using the backscattered light.

### BRIEF DESCRIPTION OF DRAWINGS

[Fig. 1] Fig. 1 is a cross-sectional view of a power cable 50 according to Embodiment 1.
[Fig. 2] Fig. 2 is a cross-sectional view of a detection wire member 61 of Fig. 1.
[Fig. 3] Fig. 3 is a diagram depicting a portion of the length of detection wire member 61 of Fig. 1.
[Fig. 4] Fig. 4 is a diagram depicting a configuration of a power cable anomalous point detection system 100 according to Embodiment 1.
[Fig. 5] Fig. 5 is a flowchart depicting an anomalous-point detection procedure for a power cable according to Embodiment 1.
[Fig. 6] Fig. 6 is a diagram depicting a portion of the length of a power line according to Embodiment 2.
[Fig. 7] Fig. 7 is a cross-sectional view of a power cable 50A according to Embodiment 2.
[Fig. 8] Fig. 8 is a diagram depicting a configuration of a connection 80 of Fig. 6.
[Fig. 9] Fig. 9 is a diagram depicting a configuration of an optical amplifier repeater 70 of Fig. 8.
[Fig. 10] Fig. 10 is a diagram depicting a configuration of a power cable anomalous point detection system 100A according to Embodiment 3.
[Fig. 11] Fig. 11 is a diagram depicting a configuration of a power cable anomalous point detection system 100B according to Embodiment 4.
[Fig. 12] Fig. 12 is a diagram depicting a configuration of a power cable anomalous point detection system 100C according to Embodiment 5.
[Fig. 13] Fig. 13 is a diagram depicting a configuration of a power cable anomalous point detection system 100E according to Embodiment 6.
[Fig. 14] Fig. 14 is a diagram for illustrating sensing light emitted from a pulsed laser device 21E of Fig. 13.
[Fig. 15] Fig. 15 is a flowchart depicting an anomalous-point detection procedure for a power cable, according to Embodiment 6.

### DETAILED DESCRIPTION

### [Problem to be Solved by the Present Disclosure]

In Patent Literature 1, the measurement pulsed light emitted to one end of an optical fiber and backscattered light attenuate as they transmit through the optical fiber. As a result, the optical fiber deteriorates in accuracy of detection of a damage or a distortion of a power wire core, corresponding to the cable body of the power cable, or an armor. In Patent Literature 1, the length of the power cable the optical fiber to measure a damage or a distortion is limited to an extent that can ensure a signal to noise ratio (SNR) in the measurement system even if the measurement pulsed light and the backscattered light attenuate.

Patent Literature 2 discloses an optical cable and an optical transmission line for communication application, while failing to disclose a power cable. In Patent Literature 2, optical amplifier repeaters are inserted in the optical transmission line at predetermined spacing, as disclosed in paragraph [0003], and each optical amplifier repeater is supplied with power through an electric supply line within the optical cable. Each optical amplifier repeater includes a laser device, which is supplied with power through the above electric supply line. When the optical amplifier repeater includes the laser device, the optical fiber for transmitting excitation light is not required. When the optical amplifier repeater includes the laser device, however, a number of laser devices corresponding to the number of optical amplifier repeaters, and electric supply lines for the laser devices and power supplies for the laser devices are also required.

Therefore, an object of the present disclosure is to provide a power cable, a power line, a power cable anomalous point detection system, and a power cable anomalous point detection method, which are suitable for a long-haul power line, while configured in such a manner that an anomalous point is detectable by an optical fiber and an optical amplifier repeater includes no laser device.

### [Advantageous Effect of the Present Disclosure]

According to the present disclosure, a power cable, a power line, a power cable anomalous point detection system, and a power cable anomalous point detection method can be provided, which are suitable for a long-haul power line, while configured in such a manner that an anomalous point is detectable by an optical fiber and an optical amplifier repeater includes no laser device.

### [Overview of Embodiments]

Initially, embodiments of the present disclosure will be now described in a list.
(1) A power cable (50) according to the present disclosure includes: a cable body (60) including a conductor (51), an insulating layer (53), a semiconductive layer (52, 54), and a sheath (55); a first optical fiber (6) that transmits sensing light; a second optical fiber (7) that transmits backscattered light of the sensing light; an optical fiber (A) that transmits first excitation light for amplifying the sensing light; an optical fiber (B) that transmits second excitation light for amplifying the backscattered light; and at least one optical amplifier repeater (10) that amplifies the sensing light with the first excitation light, and amplifies the backscattered light with the second excitation light.
   The power cable (50) includes the plurality of optical fibers (6, 7, A, B), and the cable body (60). The power cable (50) may further include an armor (59). Representatively, the power cable (50) having the armor is utilized for a subsea power cable. The cable body (60) is the main body of the power cable. The semiconductive layer (52, 54) included in the cable body (60) is one or both of the inner semiconductive layer (52) and the outer semiconductive layer (54). The first optical fiber (6) and the second optical fiber (7) are for sensing application, rather than for communication application. In other words, the first optical fiber (6) and the second optical fiber (7) are used to detect a damage or a distortion at the cable body (60), the armor (59), or the connection (80), etc. of the power line. The optical fiber (A) may double as the first optical fiber (6) that transmits the sensing light or may be dedicated to the excitation light. The optical fiber (B) may double as the second optical fiber (7) that transmits the backscattered light or may be dedicated to the excitation light. The power cable (50), without a laser device for transmitting the excitation light and an electric supply line for supply of power to the laser device, can amplify the sensing light with the excitation light transmitted through the optical fiber (A), and amplify the backscattered light with the excitation light transmitted through the optical fiber (B). Even if a long-haul power line is constructed by such a power cable (50), an anomalous point at a long-haul power cable can be detected by the first optical fiber (6) and the second optical fiber (7).
(2) In the power cable (50) according to (1) above, the optical fiber (A) that transmits the first excitation light is the first optical fiber (6). With such a configuration, the sensing light and the first excitation light can be transmitted by the first optical fiber (6).
(3) In the power cable (50) according to (1) or (2) above, the optical fiber (B) that transmits the second excitation light is the second optical fiber (7). With such a configuration, the backscattered light of the sensing light and the second excitation light can be transmitted by the second optical fiber (7).
(4) In the power cable (50) according to (1) to (3) above, the optical amplifier repeater (10) includes a branched structure (38) which guides the backscattered light, originated from the first optical fiber (6), to the second optical fiber (7). With the branched structure (38), the backscattered light can be guided to the second optical fiber (7) and the backscattered light can be transmitted by the second optical fiber (7).
(5) In the power cable (50) according to (1) to (4) above, the cable body (60) is disposed at a center of the power cable (50), the cable body (60) includes a plurality of lines (58a, 58b) and at least one metal tube (63) on an outer side of the cable body (60), and the metal tube (63) accommodates the first optical fiber (6), the second optical fiber (7), and the optical amplifier repeater (10). With such a configuration, the first optical fiber (6), the second optical fiber (7), and the optical amplifier repeater (10) can be arranged at positions where anomalies of the cable body (60) or the armor (59), such as a damage or a distortion, are easy to detect from anomalies of the power cable (50) such as a damage or a distortion.
(6) The power cable (50) according to (5) above further includes an armor (59) on an outer periphery of the cable body (60), wherein the armor (59) is configured of the plurality of lines (58a, 58b) and the detection wire member (61), the detection wire member (61) accommodates the metal tube (63), and an outer diameter of the detection wire member (61) is equal to an outer diameter of a line adjacent to the detection wire member (61) among the plurality of lines (58a, 58b).
(7) In the power cable (50) according to (1) to (6) above, the sensing light transmits through the first optical fiber (6) in a direction from a first end (EA) to a second end (EB), and the backscattered light transmits through the second optical fiber (7) in a direction from a second end (ED) to a first end (EC), wherein the optical amplifier repeater (10) includes: a first Erbium-doped fiber (1) that amplifies the sensing light, transmitted from a direction of the first end (EA) of the first optical fiber (6), with the first excitation light; a branching optical fiber (39); a first optical directional coupler (3) that sends the sensing light amplified by the first Erbium-doped fiber (1) in a direction to the second end (EB) of the first optical fiber (6), and sends the backscattered light, transmitted from a direction of the second end (EB) of the first optical fiber (6), to the branching optical fiber (39); a second Erbium-doped fiber (4); and a second optical directional coupler (5) that sends, to the second Erbium-doped fiber (4), the backscattered light transmitted through the branching optical fiber (39), and the backscattered light transmitted from a direction of the second end (ED) of the second optical fiber (7). The second Erbium-doped fiber (4) amplifies the backscattered light, transmitted through the second optical directional coupler (5), with the second excitation light, and sends the amplified backscattered light in a direction to the first end (EC) of the second optical fiber (7). With such a configuration, the sensing light can be amplified by the first Erbium-doped fiber (1), and the backscattered light can be amplified by the second Erbium-doped fiber (4).
(8) The power cable (50) according to (1) to (7) above further includes one or more third optical fibers (8) that transmit the first excitation light, the one or more third optical fibers (8) being independent of the first optical fiber (6). With such a configuration, the first excitation light and the sensing light can be transmitted by separate optical fibers.
(9) The power cable (50) according to (1) to (8) above further includes one or more fourth optical fibers (9) that transmit the second excitation light, the one or more fourth optical fibers (9) being independent of the second optical fiber (7). With such a configuration, the second excitation light and the backscattered light can be transmitted by separate optical fibers.
(10) The power cable (50) according to (7) above further includes one or more third optical fibers (8) that transmit the first excitation light, the one or more third optical fibers (8) being independent of the first optical fiber (6). The first excitation light transmits through the third optical fiber (8) in a direction from a first end (EE) to a second end (EF). The optical amplifier repeater (10B) further includes a third optical directional coupler (120) that sends, to the first Erbium-doped fiber (1), a portion of the first excitation light transmitted from the first end (EE) of the third optical fiber (8), and sends a remainder of the first excitation light in a direction to the second end (EF) of the third optical fiber (8). With such a configuration, the amplification of the sensing light can be adjusted by adjusting a light branching ratio in the third optical directional coupler (120).
(11) The power cable (50) according to (7) or (10) above further includes one or more fourth optical fibers (9) that transmit the second excitation light, the one or more fourth optical fibers (9) being independent of the second optical fiber (7). The second excitation light transmits through the fourth optical fiber (9) in a direction from a first end (EG) to a second end (EH). The optical amplifier repeater (10C) further includes a fourth optical directional coupler (121) that sends a portion of the second excitation light, transmitted from the first end (EG) of the fourth optical fiber (9), to the second Erbium-doped fiber (4), and sends a remainder of the second excitation light in a direction to the second end (EH) of the fourth optical fiber (9). With such a configuration, the amplification of the backscattered light can be adjusted by adjusting the light branching ratio in the fourth optical directional coupler (121).
(12) A power line according to the present disclosure includes: a first power cable (50A-1); a second power cable (50A-2); and a connection (80) connecting the first power cable (50A-1) and the second power cable (50A-2). Each of the first power cable (50A-1) and the second power cable (50A-2) includes: a cable body (60) including a conductor (51), an insulating layer (53), a semiconductive layer (52, 54), and a sheath (55); a first optical fiber (6) that transmits sensing light; a second optical fiber (7) that transmits backscattered light of the sensing light; an optical fiber (A) that transmits first excitation light for amplifying the sensing light; and an optical fiber (B) that transmits second excitation light for amplifying the backscattered light. The connection (80) includes an optical amplifier repeater (10) that amplifies the sensing light with the first excitation light, and amplifies the backscattered light with the second excitation light. The power line according to the present disclosure, even if it is a long-haul power line, allows amplification of the sensing light and the backscattered light by the excitation light beams transmitted through the optical fibers (A) and (B), respectively. With such a configuration, an anomalous point even at a long-haul power line can be detected by the first optical fiber (6) and the second optical fiber (7).
(13) A power cable anomalous point detection system (100) according to the present disclosure includes a power cable (50) including: a cable body (60) including a conductor (51), an insulating layer (53), a semiconductive layer (52, 54), and a sheath (55); first optical fiber (6) that transmits sensing light; a second optical fiber (7) that transmits backscattered light of the sensing light; an optical fiber (A) that transmits first excitation light for amplifying the sensing light; an optical fiber (B) that transmits second excitation light for amplifying the backscattered light; a laser device (21) that emits the sensing light; an excitation device (11) that emits the first excitation light and the second excitation light; an optical amplifier repeater (10) that amplifies the sensing light with the first excitation light, and amplifies the backscattered light with the second excitation light; and a measurement device (20) that detects an anomalous point at the power cable based on the backscattered light. Even if a long-haul power line constructed by the power cable (50), the power cable anomalous point detection system (100) allows amplification of the sensing light and the backscattered light with the excitation light beams transmitted from the optical fibers (A) and (B), respectively. Such a power cable anomalous point detection system (100) can detect an anomalous point at a long-haul power line by the first optical fiber (6) and the second optical fiber (7).
(14) In the power cable anomalous point detection system (100A) according to (13) above, the second excitation light transmits through the second optical fiber (7) and the excitation device (11A) emits the second excitation light having a shorter wavelength than the sensing light. With such a configuration, the backscattered light can be Raman amplified by the second optical fiber (7).
(15) In the power cable anomalous point detection system (100E) according to (13) or (14) above, during a defined time, the laser device (21E) sequentially emits sensing light beams modulated at a plurality of frequencies, and the measurement device (20E) includes a frequency filter (41) that detects components of the plurality of frequencies among frequency components of the backscattered light. With such a configuration, multiple number of data items on the backscattered light can be obtained in one measurement period.
(16) In the power cable anomalous point detection system (100) according to (13) to (15) above, the measurement device (20) includes a wavelength filter (28) that cuts out the first excitation light and the second excitation light to detect a wavelength of the sensing light emitted from the laser device (21). With such a configuration, the backscattered light having the same wavelength as the sensing light emitted by the laser device (21), in some cases, backscattered light having a Raman amplified wavelength, can be extracted.
(17) A method of detection of an anomalous point at a power cable (50) according to the present disclosure detects an anomalous point at the power cable (50) including: a cable body (60) including a conductor (51), an insulating layer (53), a semiconductive layer (52, 54), and a sheath (55); a first optical fiber (6) that transmits a sensing light; and a second optical fiber (7) that transmits backscattered light of the sensing light. The power cable (50) includes an optical fiber (A) that transmits first excitation light for amplifying the sensing light, and an optical fiber (B) that transmits second excitation light for amplifying the backscattered light. The method of detection of an anomalous point at the power cable (50) includes: emitting, by the excitation device (11), the first excitation light and the second excitation light; emit ting, by the first laser device (21), the sensing light; amplifying, by the optical amplifier repeater (10), the sensing light with the first excitation light; amplifying, by the optical amplifier repeater (10), the backscattered light with the second excitation light; and detecting, by the measurement device (20), the anomalous point at the power cable (50) using the backscattered light. With such a method, even if a long-haul power line is constructed by the power cable (50), the sensing light and the backscattered light can be amplified with the excitation light beams transmitted through the optical fibers (A) and (B), respectively. A method of detection of an anomalous point at such a power cable (50) can detect an anomalous point at the long-haul power line by the first optical fiber (6) and the second optical fiber (7).

### [Description of Embodiments]

Hereinafter, the embodiments will be described with reference to the accompanying drawings.

### <Embodiment 1>

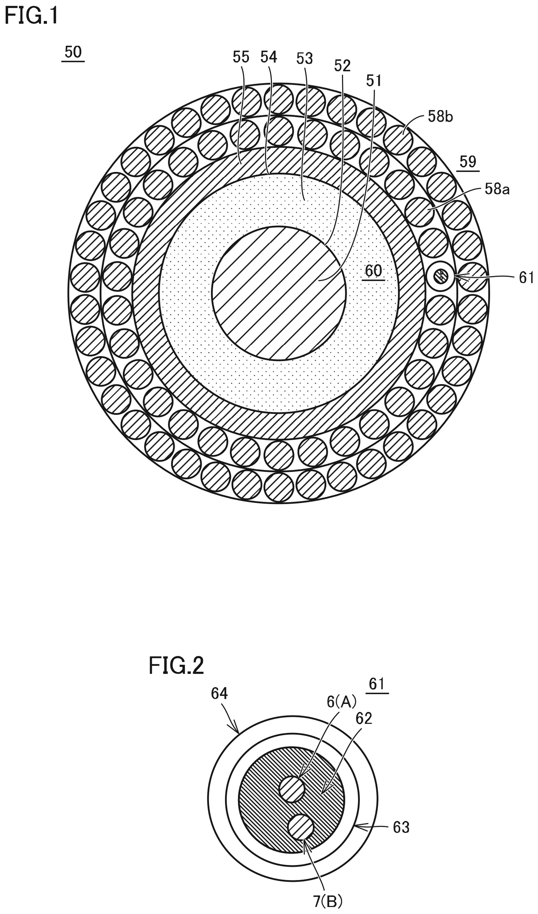

Referring to Fig. 1, initially, a power cable 50 is now described. Power cable 50 is a combined optical and power cable. Power cable 50 includes a cable body 60 for transmitting power, an armor 59, and detection wire members 61 for transmitting light. Detection wire member 61 includes optical fibers 6 and 7, which are used to detect anomalous points at a power cable or the like, as described below. Detection wire member 61, in this example, also includes multiple optical amplifier repeaters 10, as described below.

Cable body 60 is the main body of power cable 50. Cable body 60 is configured of a conductor 51, an inner semiconductive layer 52, an insulating layer 53, an outer semiconductive layer 54, a sheath 55, and so on. Conductor 51, inner semiconductive layer 52, insulating layer 53, outer semiconductive layer 54, and sheath 55 are disposed in the listed order starting from the center of cable body 60. Insulating layer 53 is an electrical insulator composed of cross-linked polyethylene, for example. Semiconductive layers 52 and 54 are composed of semi-conducting materials. Sheath 55 is, for example, a lead sheath. Besides, cable body 60 may include a shielding layer, a water barrier layer, an anticorrosive layer, etc. The shielding layer is composed of a conductive material. The water barrier layer is configured of a lamination of a metal layer and a resin layer, for example. Armor 59 is disposed on the outer periphery of cable body 60. For example, armor 59 protects cable body 60 from external damages, or supports a load on the power cable.

Armor 59 has multiple lines 58a and 58b. Armor 59, in this example, has a multilayer structure consisting of an inner layer and an outer layer. Multiple lines 58a, constituting the inner layer, are disposed fit along the outer circumferential surface of cable body 60. Multiple lines 58b, constituting the outer layer, are disposed fit along the circumference of the outer circumferential surface formed by lines 58a. Lines 58a and 58b are configured of metal or fiber-reinforced plastics, for example. The metal is a magnetic material such as iron, for example. If lines 58a and 58b are configured of metal, they have excellent strengths. If lines 58a and 58b are configured of non-magnetic materials such as a resin, they are of light-weight. A resin layer, not shown, may be included between the inner layer and the outer layer. Moreover, a resin layer, not shown, formed to cover armor 59, may be included. These resin layers are configured by, for example, strings, formed of resins such as polypropylene, being wound.

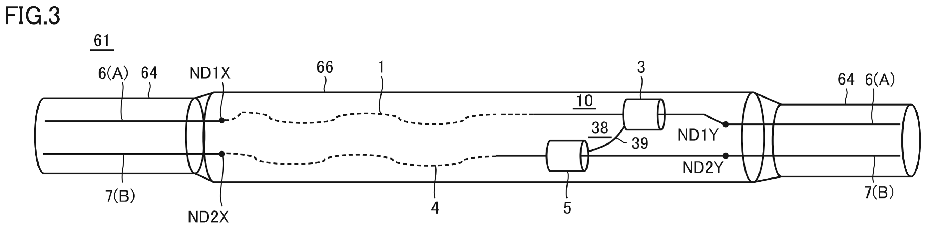

Some of lines 58a, constituting the inner layer of the two layers of armor 59, are replaced with detection wire members 61 to detect anomalies of cable body 60 and armor 59, such as a damage or a distortion. Detection wire member 61 may be formed at at least one position or multiple positions at armor 59. While Fig. 3 is a diagram illustrating armor 59 as having a multilayer structure, armor 59 may have a single-layer structure. Moreover, some of lines 58b, constituting the outer layer of armor 59, may be replaced with detection wire members 61. The outer diameter of detection wire member 61 is equal to the outer diameter of a line adjacent to detection wire member 61, among lines 58a and lines 58b. All the lines 58a, all the lines 58b, and detection wire members 61 may have an equal outer diameter.

Referring to Figs. 2 and 3, detection wire member 61 is now described.

Detection wire member 61 includes a metal tube 63, and a sheath 64 which is disposed on the outer periphery of metal tube 63. Metal tube 63 is made of metal such as stainless steel, for example. Metal tube 63 accommodates a first optical fiber 6, a second optical fiber 7, and an optical amplifier repeater 10. A jelly compound 62 is embedded in the void of metal tube 63. Sheath 64 is made of, for example, a resin such as polyethylene, and constitutes the outermost layer of detection wire member 61. Metal tube 63 and sheath 64 function as a waterproofing layer and an anticorrosive layer.

First optical fiber 6 (A) transmits sensing light emitted from a laser device 21 described below. In this example, first optical fiber 6 (A) also transmits first excitation light emitted from an excitation laser device 22 described below. Second optical fiber 7 (B) is an optical fiber independent of first optical fiber 6 (A). Second optical fiber 7 (B) transmits backscattered light of the sensing light. In this example, second optical fiber 7 (B) also transmits second excitation light emitted from an excitation laser device 24 described below. Optical fiber A may double as first optical fiber 6 that transmit the sensing light as in this example, or may be dedicated to the excitation light. Optical fiber B may double as second optical fiber 7 that transmits the backscattered light as in this example, or may be dedicated to the excitation light.

As a method for manufacturing detection wire member 61, first optical fiber 6 and second optical fiber 7 may be connected to optical amplifier repeater 10 and wrapped with metal tube 63, or a metal tube accommodating first optical fiber 6 and second optical fiber 7 and a metal tube accommodating the optical amplifier repeater may be created, and joined together by welding or brazing or with metallic tape or the like.

Referring to Fig. 3, optical amplifier repeater 10 included in detection wire member 61 is now described.

Optical amplifier repeater 10 is inserted at several positions in the middle of first optical fiber 6 and second optical fiber 7. Fig. 3 shows optical amplifier repeater 10 at only one location.

A housing 66 for optical amplifier repeater 10 accommodates a first Erbium-doped fiber 1, a second Erbium-doped fiber 4, optical directional couplers 3 and 5, and a branching optical fiber 39. Similarly to detection wire member 61, housing 66 has a waterproof structure including metal tube 63 and sheath 64. While Fig. 3 is exaggerating the outer diameter of housing 66 to be greater than the outer diameter of detection wire member 61, the outer diameter of housing 66 may be the same as the outer diameter of detection wire member 61. In other words, detection wire member 61 may have a uniform outer diameter across its total length, including the portions where optical amplifier repeaters 10 are included. Metal tube 63 included in detection wire member 61, too, may have a uniform outer diameter across its total length including the portions where optical amplifier repeaters 10 are included. Furthermore, the outer diameter of detection wire member 61 or the outer diameter of metal tube 63 may be the same as the outer diameters of lines (line 58a in Fig. 1) adjacent to detection wire member 61 in the circumference direction of cable body 60, among lines 58a and 58b constituting armor 59. If the outer diameter of detection wire member 61 or metal tube 63 is a uniform outer diameter across its total length as noted above, and the same as the outer diameters of the lines constituting armor 59, Fig. 1. The components constituting optical amplifier repeater 10 may be sized to be accommodated within metal tube 63 having such an outer diameter. While Fig. 3 shows first Erbium-doped fiber 1, second Erbium-doped fiber 4, optical directional couplers 3 and 5, and branching optical fiber 39, it should be noted that the optical amplifier repeater 10 may further include an opto-isolator.

As Erbium ions within first Erbium-doped fiber 1 are excited by the first excitation light, the sensing light transmitting through first optical fiber 6 is amplified. As Erbium ions within second Erbium-doped fiber 4 are excited by the second excitation light, the backscattered light transmitting through second optical fiber 7 is amplified.

Branching optical fiber 39, optical directional coupler 3, and optical directional coupler 5 form a branched structure 38, which guides the backscattered light, originated from first optical fiber 6, to second optical fiber 7. Instead of including branched structure 38, a structure may be utilized in which a portion of the backscattered light leaks out from first optical fiber 6 to second optical fiber 7.

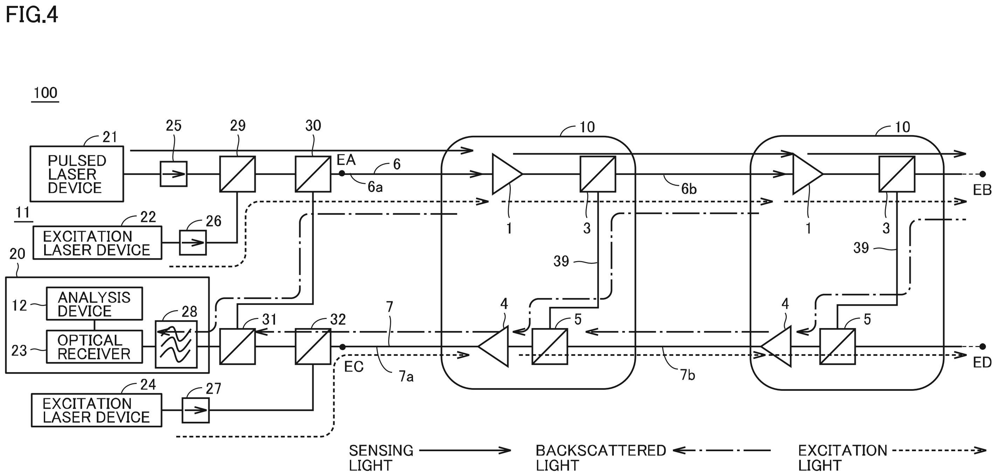

Referring to Fig. 4, a power cable anomalous point detection system 100 is now described.

Power cable anomalous point detection system 100 includes power cable 50, first optical fiber 6, second optical fiber 7, optical amplifier repeaters 10, pulsed laser device 21 (a laser device), excitation laser device 22, a measurement device 20, excitation laser device 24, opto-isolators 25, 26, and 27, and optical directional couplers 29, 30, 31, and 32. Measurement device 20 includes a wavelength filter 28, an optical receiver 23, and an analysis device 12. Among the components of power cable 50, Fig. 4 depicts first optical fiber 6, second optical fiber 7, and optical amplifier repeaters 10. Pulsed laser device 21 (a laser device), excitation laser device 22, measurement device 20, and excitation laser device 24 are components independent of power cable 50, and connected to first optical fiber 6 or second optical fiber 7 via opto-isolators 25, 26, and 27 or optical directional couplers 29, 30, 31, and 32, at an end of power cable 50 as described below.

Pulsed laser device 21 emits the sensing light having a pulse waveform. For the sensing light, for example, light in a wavelength band, called the C-band or the L-band, is utilized. The C-band is a wavelength band whose wavelength is greater than equal to 1525 nm and less than or equal to 1563 nm. The L-band is a wavelength band whose wavelength is greater than or equal to 1560 nm or less than or equal to 1610 nm. For example, pulsed laser device 21 emits sensing light whose wavelength is 1560 nm. It is known that the optical fiber has a smaller transmission loss for the light having the wavelength of 1560 nm. In addition, light having a long wavelength, such as 1560 nm, is known to have a large transmission loss and suitable for an optical fiber to detect anomalies of a power cable.

Excitation laser device 22 emits the first excitation light that excites the sensing light. For example, excitation laser device 22 emits the first excitation light having a wavelength of 1480 nm.

Excitation laser device 24 emits the second excitation light that excites the backscattered light. For example, excitation laser device 24 emits the second excitation laser light having a wavelength of 1480 nm.

Excitation laser device 22 and excitation laser device 24 provides an excitation device 11. Excitation device 11 may bifurcate and output, to first optical fiber 6 and second optical fiber 7, the output of one excitation laser device, without the use of two excitation laser devices.

First optical fiber 6 and second optical fiber 7 are disposed proximate to each other (see also Fig. 2). First optical fiber 6 has a first end EA and a second end EB. The direction from first end EA to second end EB may be described as a forward direction, and the direction from second end EB to first end EA may be described as a reverse direction. Second optical fiber 7 has a first end EC and a second end ED. The direction from first end EC to second end ED may be described as a forward direction, and the direction from second end ED to first end EC may be described as a reverse direction.

The sensing light and the first excitation light are transmitted through first optical fiber 6 from first end EA toward second end EB.

The second excitation light is transmitted through second optical fiber 7 from first end EC toward second end ED. The backscattered light of the sensing light is transmitted through second optical fiber 7 toward first end EC.

Preferably, first optical fiber 6 and second optical fiber 7 have low transmission losses and large effective areas so that they can transmit powerful light far away. An optical fiber having a large effective area refers to an optical fiber having a core diameter of 110 µm or greater, for example. The core diameter of the optical fiber may be 125 µm or greater, or, furthermore, 135 µm or greater.

Optical amplifier repeaters 10 are disposed at multiple breaks in the middle of first optical fiber 6 and second optical fiber 7.

Optical amplifier repeater 10 amplifies the sensing light with the first excitation light, and amplifies the backscattered light with the second excitation light.

Opto-isolator 25 is connected to the outlet of pulsed laser device 21. Opto-isolator 25 blocks transmission of light to pulsed laser device 21.

Opto-isolator 26 is connected to the outlet of excitation laser device 22. Opto-isolator 26 blocks transmission of light to excitation laser device 22.

Opto-isolator 27 is connected to the outlet of excitation laser device 24. Opto-isolator 27 blocks transmission of light to excitation laser device 24.

Optical directional coupler 29 is connected to optical directional coupler 30, opto-isolator 25, and opto-isolator 26. Optical directional coupler 29 sends the sensing light emitted from pulsed laser device 21 and the first excitation light sent through opto-isolator 26, to optical directional coupler 30.

Optical directional coupler 30 is connected to first end EA of first optical fiber 6, optical directional coupler 29, and optical directional coupler 31. Optical directional coupler 30 causes the sensing light and the first excitation light, which are sent from optical directional coupler 29, to be transmitted through first optical fiber 6 in the forward direction. Optical directional coupler 30 sends to optical directional coupler 31 the backscattered light occurred at a portion 6a of first optical fiber 6 and transmitted through portion 6a in the reverse direction. Note that an optical circulator may be included, instead of optical directional couplers 30 and 31.

Optical directional coupler 32 is connected to first end EC of second optical fiber 7, opto-isolator 31, and opto-isolator 27. Optical directional coupler 32 causes the second excitation light, which is emitted from excitation laser device 24, to be transmitted through second optical fiber 7 in the forward direction. Optical directional coupler 32 sends the backscattered light, having transmitted through second optical fiber 7 in the reverse direction, to optical directional coupler 31.

Optical directional coupler 31 is connected to optical directional coupler 32, measurement device 20, and optical directional coupler 30. Optical directional coupler 31 sends to measurement device 20 the backscattered light transmitted through portion 6a of first optical fiber 6 in the reverse direction and through optical directional coupler 30. Optical directional coupler 31 sends to measurement device 20 the backscattered light having transmitted through second optical fiber 7 in the reverse direction and through optical directional coupler 32.

Referring to Figs. 3 and 4, a configuration and an operation of optical amplifier repeater 10 are now described.

Optical amplifier repeater 10 includes first Erbium-doped fiber 1, optical directional coupler 3, optical directional coupler 5, second Erbium-doped fiber 4, and branching optical fiber 39.

First Erbium-doped fiber 1 is connected to a first connection point ND1X of first optical fiber 6 and optical directional coupler 3. First Erbium-doped fiber 1 amplifies the sensing light, transmitted through first optical fiber 6 in the forward direction, with the first excitation light transmitted through first optical fiber 6 in the forward direction.

Optical directional coupler 3 is connected to branching optical fiber 39, first Erbium-doped fiber 1, and a second connection point ND1Y of first optical fiber 6. Optical directional coupler 3 sends the amplified sensing light and the first excitation light to first optical fiber 6. Optical directional coupler 3 sends to branching optical fiber 39 the backscattered light occurred at a portion 6b of first optical fiber 6 and transmitted through portion 6b in the reverse direction.

First connection point ND1X of first optical fiber 6 is closer to first end EA of first optical fiber 6 than second connection point ND1Y of first optical fiber 6 is, and farther away from second end EB of first optical fiber 6 than second connection point ND1Y of first optical fiber 6 is.

Optical directional coupler 5 is connected to branching optical fiber 39, second connection point ND2Y of second optical fiber 7, and second Erbium-doped fiber 4. Optical directional coupler 5 sends, to second Erbium-doped fiber 4, the backscattered light transmitted through branching optical fiber 39 (i.e., the backscattered light occurred at portion 6b of first optical fiber 6 and transmitted through portion 6b in the reverse direction) and the backscattered light transmitted through second optical fiber 7 in the reverse direction (i.e., the backscattered light occurred at a portion (not shown) of first optical fiber 6 (closer to second end EB) and sent to second optical fiber 7 via an optical amplifier repeater 10 not shown).

Second Erbium-doped fiber 4 is connected to optical directional coupler 5 and a first connection point ND2X of second optical fiber 7.

Second Erbium-doped fiber 4 amplifies the backscattered light, sent through optical directional coupler 5, with the second excitation light transmitted through second optical fiber 7 in the forward direction, and outputs the amplified backscattered light in a direction to first end EC of second optical fiber 7.

First connection point ND2X of second optical fiber 7 is closer to first end EC of second optical fiber 7 than second connection point ND2Y of second optical fiber 7 is, and farther away from second end ED of second optical fiber 7 than second connection point ND2Y of second optical fiber 7 is.

Supplemental fibers, functioning as optical fibers 6 and 7, may be included in optical directional couplers 3 and 5. For example, if optical directional coupler 3 includes first and second supplemental fibers, first Erbium-doped fiber 1 is connected to a first end of the first supplemental fiber, and optical directional coupler 3 is connected to a second end of the first supplemental fiber. Optical directional coupler 3 is connected to a first end of the second supplemental fiber, and second connection point ND1Y of first optical fiber 6 is connected to a second end of the second supplemental fiber.

Wavelength filter 28 is connected to optical directional coupler 31. Wavelength filter 28 passes the backscattered light of the light sent through optical directional coupler 31. Wavelength filter 28 does not pass the first excitation light and the second excitation light. The backscattered light passing through wavelength filter 28 has the same wavelength as the sensing light, for example. The output of wavelength filter 28 is sent to optical receiver 23.

Optical receiver 23 has a semiconductor light-receiving element. Optical receiver 23 converts the light sent through wavelength filter 28 into an electrical signal. Here, the detection sensitivity can be enhanced by applying the coherent nature of the optical signal for the detection.

Using multiple signals sent through optical receiver 23, analysis device 12 determines whether an anomaly has occurred at cable body 60 or armor 59, and, in the event of an anomaly, detects an anomalous point. Analysis device 12 can detect the location of the anomalous point at power cable 50, basically, from a time gap between the time of emission of the sensing signal and the time of reception of the backscattered light. For example, a coherent-optical time-domain reflectometer (C-OTDR) that measures an increased loss due to a damage to an optical fiber, or a distributed acoustic sensor (DAS) that detects a distortion or vibration of a power cable may be used as a method of detection. If an anomaly occurs at cable body 60 or armor 59, a damage, a distortion, a vibration, etc. due to the anomaly, are applied to the optical fiber. Using these damages occurred at the optical fiber, an anomalous point at cable body 60 or armor 59 can be detected.

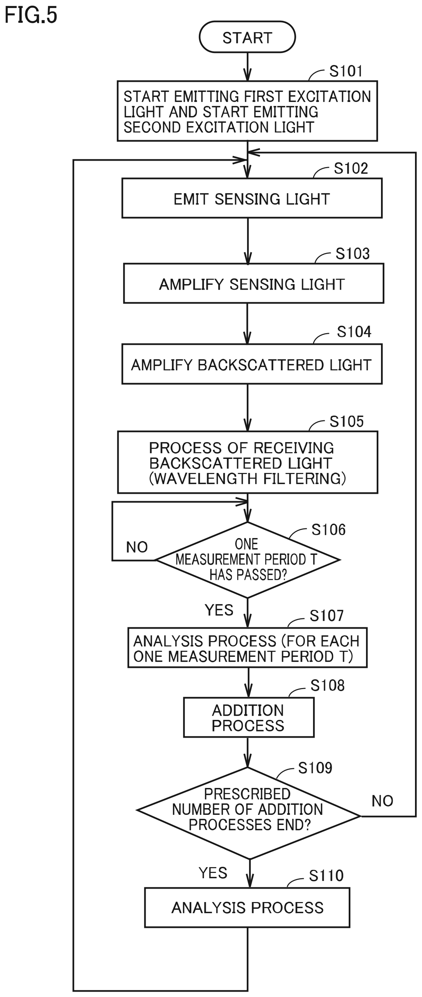

Referring to Fig. 5, an anomalous-point detection procedure for the power cable according to Embodiment 1 is now described.

In step S101, excitation laser device 22 starts emitting the first excitation light and excitation laser device 24 starts emitting the second excitation light. The timing of the start of emission of the first excitation light and the timing of the start of emission of the second excitation light may be coincident. The first excitation light transmits through first optical fiber 6. The second excitation light transmits through second optical fiber 7.

In step S102, pulsed laser device 21 emits the sensing light (the pulsed light). The sensing light transmits through first optical fiber 6.

In step S103, optical amplifier repeater 10 amplifies the sensing light with the first excitation light. The backscattered light transmits through first optical fiber 6 in the reverse direction and enters optical amplifier repeater 10.

In step S104, optical amplifier repeater 10 amplifies the backscattered light with the second excitation light and sends the amplified backscattered light to second optical fiber 7. The backscattered light transmits through second optical fiber 7 in the reverse direction, and is amplified with the second excitation light at the midway optical amplifier repeater 10, and input to measurement device 20. In the event of an anomaly at power cable 50 such as cable body 60 or armor 59, the physical quantities (a strength, a phase, etc.) of the backscattered light vary (attenuate for strength). Thus, measurement device 20 is allowed to know the occurrence of the anomaly and where the anomaly occurred by knowing the presence or absence of the variation in physical quantities.

In step S105, measurement device 20 performs a process of receiving the backscattered light. In other words, wavelength filter 28 sends to optical receiver 23 the backscattered light of the light sent through optical directional coupler 31. Optical receiver 23 converts the light sent through wavelength filter 28 into an electrical signal and sends the electrical signal to analysis device 12.

In step S106, if one measurement period T has passed since the previous emission of the sensing light (pulsed light), the process proceeds to step S107. The one measurement period T may be set to be greater than or equal to a time gap between the time the sensing light is emitted from pulsed laser device 21 and the time the optical receiver 23 receives the backscattered light occurred at second end EB of first optical fiber 6. If the one measurement period T is the above time gap, the accuracy in anomaly sensing is enhanced. The above time depends on a length of optical fiber and a transmission speed of the light through the optical fiber. Therefore, if the lengths of first optical fiber 6 and second optical fiber 7 are, for example, 500 km, the one measurement period T is approximately 5 milliseconds. Measurement device 20 continues to receive the backscattered light within the one measurement period T.

In step S107, analysis device 12 determines physical quantities from the backscattered light sent through optical receiver 23. Using the determined physical quantities (hereinafter, called most recent physical quantities), analysis device 12 detects the presence or absence of an anomaly.

The presence or absence of an anomaly may be detected by comparing the most recent physical quantities with one or more thresholds, for example. The one or more thresholds are values according to respective positions at power cable 50, and, for example, if there is no anomaly at power cable 50, set depending on physical quantities of the backscattered light which are calculated according to a transmission distance. The physical quantities determined for each one measurement period T may be accumulated and the accumulated information may be utilized. The accumulated information indicates trends in past and the use of the accumulated information facilitates a reduction of the effect of noise. For example, analysis device 12 may compare the difference between the most recent physical quantities and the immediately preceding physical quantities with preset thresholds. Instead of the immediately preceding physical quantities, an average of retrospective physical quantities for a period of time may be used. Instead of the average, a variance in physical quantities for a period of time may be compared with or used as thresholds. This analysis process allows detection of the presence or absence of an anomaly that can possibly occur in a short period of time.

In step S108, analysis device 12 adds up physical quantities (the strength, the phase difference, the phase change, etc. of the backscattered light) of signals transmitted through optical receiver 23.

**In** step S109, each time the addition process ends for a prescribed number of times, the process proceeds to step S110. Otherwise, the process returns to step S102. The added values are always stored and saved.

**In** step S110, analysis device 12 uses the added values (hereinafter, called the most recent added values), including the most recent physical quantities, and the past added values to detect the presence or absence of an anomaly again. For example, analysis device 12 compares a difference between the average of the past added values and the average of the most recent added values with a preset threshold. The average of the added values is calculated by, for example, dividing the added values by the prescribed number of times. Instead of the average, the variance in added values may be compared with or used as a threshold. The variance indicates a variation in signals caused by noise. The use of the accumulated information, such as the average of the past added values, facilitates a further reduction of the effect of noise. This analysis process allows detection of the presence or absence of an anomaly that can possibly develop for a long term (such as a minute distortion or change in phase, etc. held for a long period of time). In other words, the occurrence of an external damage or a permanent damage such as a fatigue to power cable 50 can also be sensed. Subsequently, the added values are reset, and the process returns to step S102.

As described above, according to the present embodiment, the use of optical fibers 6 and 7, and optical amplifier repeaters 10, which amplify the light transmitted through optical fibers 6 and 7 allow accurate detection, in a short time, of anomalous points such as a ground fault accident, an external damage or a fatigue of the long-haul power cable 50 of 300 km or longer, or even 500 km or longer. Furthermore, according to the present embodiment, as the sensing light are emitted from opposing ends of power cable 50, it is expected that an anomalous point such as a ground fault accident, an external damage, or a fatigue of the long-haul power cable 50 such as 1,000 km or longer can be detected in a short time. In particular, when power cable 50 is laid on the ocean floor, the labor of hauling power cable 50 on board and conducting inspection can be saved. Moreover, according to the present embodiment, a fault point on power cable 50 can be detected immediately after the occurrence of a ground fault accident. Furthermore, according to the present embodiment, since the excitation light is transmitted to optical amplifier repeaters 10 through optical fibers 6 and 7, a configuration of including: an excitation laser device that generates excitation light in optical amplifier repeater 10; and a power line that supplies the excitation laser device with the supply voltage is not required.

### <Embodiment 2>

In Embodiment 2 and the following embodiments, differences from Embodiment 1 will be, primarily, described, and descriptions of common elements will not be repeated.

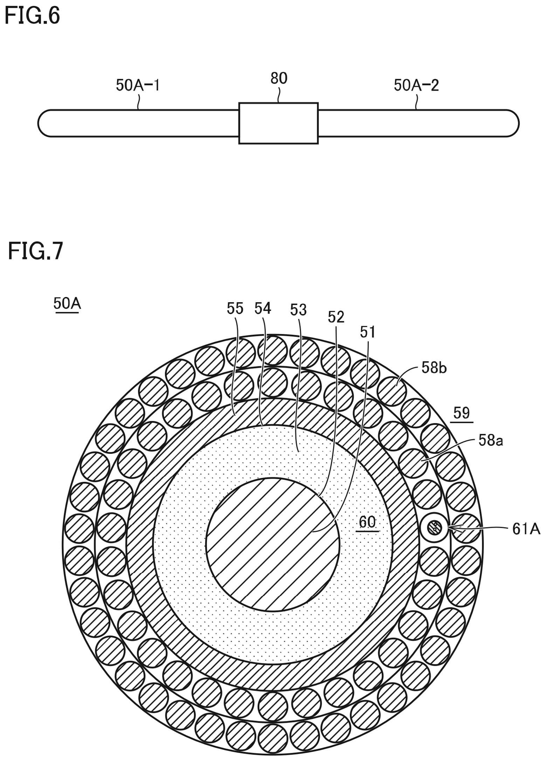

Referring to Fig. 6, a power line according to Embodiment 2 is now described.

The power line includes multiple power cables 50A, and a connection 80 connecting two power cables 50A adjacent to each other. Fig. 6 depicts a first power cable 50A-1 and a second power cable 50A-2.

Referring to Fig. 7, a power cable 50A included in a power line according to Embodiment 2 is now described.

Power cable 50A according to Embodiment 2 differs from power cable 50 according to Embodiment 1 in that the power cable 50A according to Embodiment 2 includes detection wire members 61A replacing some of lines 58b.

Similarly to detection wire member 61 according to Embodiment 1, detection wire member 61A includes a first optical fiber 6 and a second optical fiber 7. Unlike detection wire member 61 according to Embodiment 1, detection wire member 61A includes no optical amplifier repeater 10 in the middle. An optical amplifier repeater 10 is included in connection 80. In other words, power cable 50A does not include optical amplifier repeater 10, and connection 80, which is a portion of the power line, includes optical amplifier repeater 10.

Next, the power line according to Embodiment 2 is described. Representatively, the opposing ends of the power line are disposed on a land. Most of the power line, except for the opposing ends, that is, the middle portion of the power line, including connection 80, is laid on the ocean floor. To emit sensing light from the opposing ends of the power line, control devices are disposed on the respective opposing ends of the power line. To emit the sensing light from only one end of the power line, a control device is disposed on the one end of the power line. The control device includes a pulsed laser device 21, an excitation laser device 22, a measurement device 20, an excitation laser device 24, opto-isolators 25, 26, 27, and optical directional couplers 29, 30, 31, and 32, which are shown in Fig. 4, and a power supply not shown. The power supply supplies power having a voltage supporting devices 20, 21, 24, etc. to drive these devices.

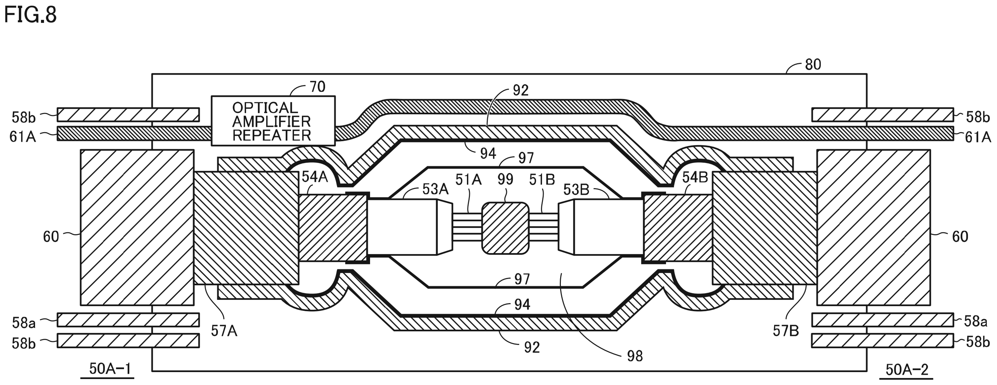

Referring to Fig. 8, connection 80 included in the power line according to Embodiment 2 is now described.

A conductor 51A of a cable body 60 of power cable 50A-1 and a conductor 51B of a cable body 60 of power cable 50A-2 are connected together by a sleeve 99. An insulation 98, made of an electrical insulation tape or the like, is formed around the conductors 51A and 51B and sleeve 99. Insulation 98 is disposed across the insulating layers 53A and 53B of the respective cable bodies 60 described above. A semiconductive portion 97 is formed on the outer periphery of insulation 98, across the outer semiconductive layers 54A and 54B of the respective cable bodies 60 described above. These components are surrounded and protected by a metal tube 94. Metal tube 94 is filled with a water proofing admixture not shown. Metal tube 94 also functions as a member to electrically connect shielding layers 57A and 57B of the respective cable bodies 60 described above. A protective layer 92, made of a protective tape or the like, is formed on the outer circumferential surface of metal tube 94.

Adjacent two detection wire members 61A are connected to an optical amplifier repeater 70.

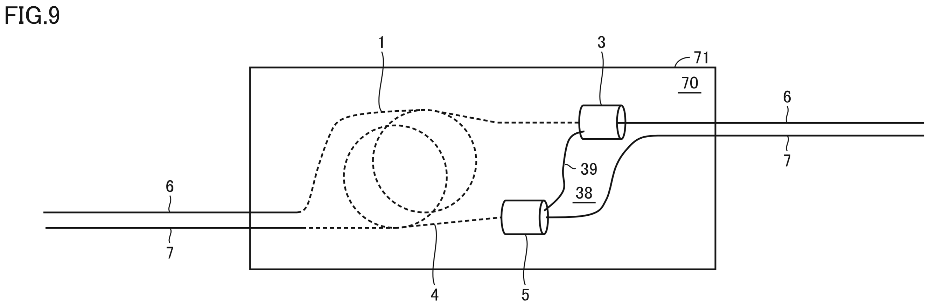

Referring to Fig. 9, optical amplifier repeater 70 is now described.

Similarly to optical amplifier repeater 10 according to Embodiment 1, optical amplifier repeater 70 includes a first Erbium-doped fiber 1, a second Erbium-doped fiber 4, optical directional couplers 3 and 5, and a branching optical fiber 39 accommodated in a waterproof housing 71. Similarly to optical amplifier repeater 10 according to Embodiment 1, optical amplifier repeater 70 may further include an opto-isolator.

As Erbium ions within first Erbium-doped fiber 1 are excited by first excitation light, the sensing light transmitting through first optical fiber 6 is amplified. As Erbium ions within second Erbium-doped fiber 4 are excited by second excitation light, backscattered light transmitting through second optical fiber 7 is amplified.

Branching optical fiber 39, optical directional coupler 3, and optical directional coupler 5 form a branched structure 38, which guides the backscattered light, originated from first optical fiber 6, to second optical fiber 7.

The same advantageous effects as those of Embodiment 1 can be obtained from Embodiment 2. Furthermore, in Embodiment 2, since detection wire member 61A includes no optical amplifier repeater 10, the outer diameter of detection wire member 61A can be easily adjusted to be a uniform outer diameter across its total length. Optical amplifier repeater 70 may be sized to be disposed in an available space within connection 80.

Laser devices 20, 21, and 24 and the power supply are disposed at a line end of the power line disposed on a land. Disposing laser devices 20, 21, and 24 on the opposing ends of the power line allows transmission of the sensing light and the excitation light from the respective opposing ends, resulting in a reduced sensing range of one laser device to be half the length of the power line. Due to the short sensing range, the attenuation of the light transmitting through the optical fiber can be reduced, allowing accurate detection of an anomalous point in a short time. While laser devices 20, 21, and 24 and the power supply are disposed on the land, laser conditions are easy to control, or the laser device is easy to maintain. Laser devices 20, 21, and 24 and the power supply may be disposed only on one end of the power line. Laser devices 20, 21, and 24 and the power supply are not included in power cable 50 and connection 80 of the power line, which are disposed on the ocean floor.

### <Embodiment 3>

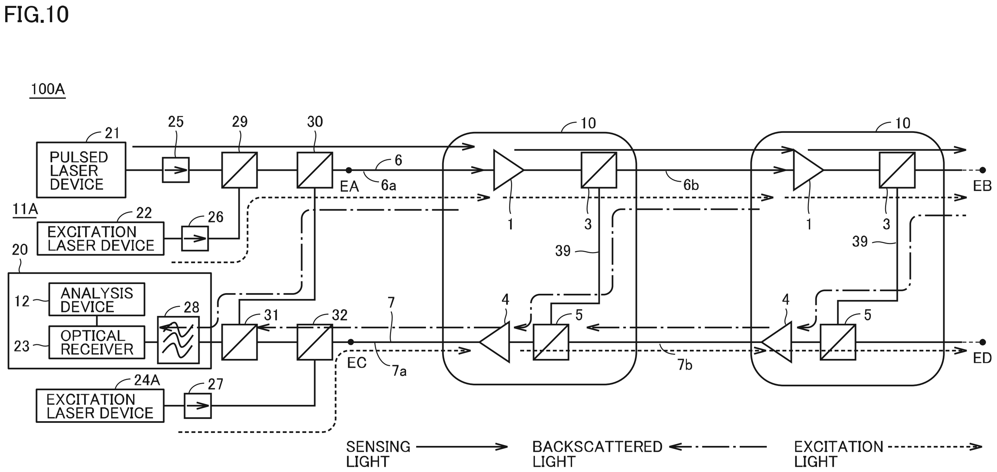

Referring to Fig. 10, a power cable anomalous point detection system 100A according to Embodiment 3 is now described.

Anomalous-point detection system 100A according to Embodiment 3 differs from anomalous-point detection system 100 according to Embodiment 1 in that the anomalous-point detection system 100A according to Embodiment 3 includes an excitation device 11A, instead of excitation device 11. Excitation device 11A includes an excitation laser device 24A, instead of excitation laser device 24.

Excitation laser device 24A emits second excitation light. The wavelength of the second excitation light may have a value of less than the wavelength of sensing light. The wavelength of the second excitation light may be set so that a difference between the wavelength of the second excitation light and the wavelength of the sensing light is in a range from 70 nm or greater to 120 nm or less, for example. For example, if the wavelength of the sensing light is 1560 nm, the wavelength of the second excitation light may be greater than or equal to 1450 nm or less or equal to 1480 nm. Excitation laser device 24A adjusts the wavelength of the second excitation light so that the wavelength of the second excitation light is shorter than the wavelength of the sensing light, here, shorter within a range of 70 nm or greater and 120 nm or less.

Even if the backscattered light is weak at a portion 7a of second optical fiber 7, the backscattered light is Raman amplified with the second excitation light emitted from excitation laser device 24A. This can extend the distance from a first end EC of second optical fiber 7 to optical amplifier repeater 10.

### <Embodiment 4>

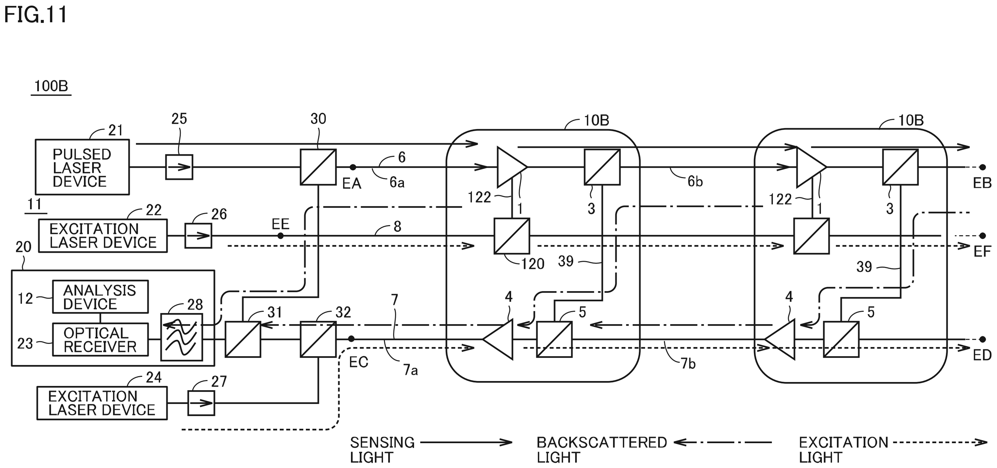

Referring to Fig. 11, a power cable anomalous point detection system 100B according to Embodiment 4 is now described. Anomalous-point detection system 100B according to Embodiment 4 differs from anomalous-point detection system 100 according to Embodiment 1 in that the anomalous-point detection system 100B includes a third optical fiber 8, does not include optical directional coupler 29, and includes an optical amplifier repeater 10B instead of optical amplifier repeater 10.

Similarly to optical amplifier repeater 10, first optical fiber 6, and second optical fiber 7 according to Embodiment 1, optical amplifier repeater 10B and third optical fiber 8 are constructed in a detection wire member 61.

Third optical fiber 8 has a first end EE and a second end EF. The direction from first end EE to second end EF may be described as a forward direction, and the direction from second end EF to first end EE may be described as a reverse direction.

Desirably, third optical fiber 8 has a low transmission loss and a large effective area so as to be able to transmit powerful light far away. See the description of Embodiment 1 for the illustration of an optical fiber having a large effective area.

The sensing light is transmitted to first optical fiber 6. First excitation light, emitted from excitation laser device 22, is transmitted to third optical fiber 8.

Optical directional coupler 30 is connected to first end EA of first optical fiber 6, opto-isolator 25, and optical directional coupler 31. Optical directional coupler 30 causes the sensing light, sent through opto-isolator 25, to be transmitted through first optical fiber 6 in the forward direction. Optical directional coupler 30 sends to optical directional coupler 31 the backscattered light occurred at a portion 6a of first optical fiber 6 and transmitted through portion 6a in the reverse direction.

Optical amplifier repeater 10B includes an optical directional coupler 120 and an optical fiber 122, in addition to the configuration of optical amplifier repeater 10 according to Embodiment 1.

Optical directional coupler 120 sends a portion of the first excitation light, transmitted from first end EE of third optical fiber 8 in the forward direction, to first Erbium-doped fiber 1 via optical fiber 122, and sends the remainder of the first excitation light in a direction to second end EF of third optical fiber 8. The amplification of the sensing light can be adjusted by adjusting a light branching ratio in each of optical directional couplers 120 in optical amplifier repeaters 10B. For example, optical directional coupler 120 in optical amplifier repeater 10B closer to first end EE of third optical fiber 8 may send a smaller proportion of the input first excitation light to first Erbium-doped fiber 1, and optical directional coupler 120 in optical amplifier repeater 10B closer to second end EF of third optical fiber 8 may send a larger proportion of the input first excitation light to first Erbium-doped fiber 1.

While Fig. 11 illustrates third optical fiber 8 as singular, third optical fiber 8 may be plural. If third optical fibers 8 are respectively connected to the respective amplifier repeaters 10B, the attenuation of the excitation light at the respective third optical fiber 8 is small, and the sensing accuracy is high. For example, assume that the third optical fiber 8 includes optical fibers a, b, and c, and optical amplifier repeaters α, β, and γ are disposed in order from the closest to the land to the farthest away from the land. Optical fiber A may be connected only to optical amplifier repeater α, without being connected to optical amplifier repeaters β and γ, optical fiber B may be connected only to optical amplifier repeater β, without being connected to optical amplifier repeaters α and γ, and optical fiber c may be connected only to optical amplifier repeater γ, without being connected to amplifier repeaters α and β. For example, optical fiber c does not pass through optical amplifier repeaters α and β, and, therefore, causes light to hardly attenuate. The same is true for the other optical fibers a and b.

### <Embodiment 5>

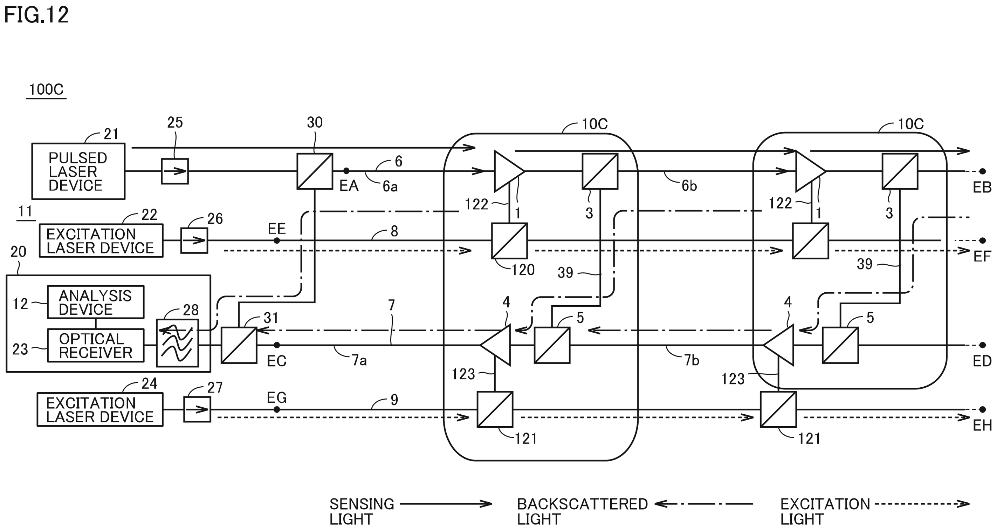

Referring to Fig. 12, a power cable anomalous point detection system 100C according to Embodiment 5 is now described. Anomalous-point detection system 100C according to Embodiment 5 differs from anomalous-point detection system 100B according to Embodiment 4 in that the anomalous-point detection system 100C according to Embodiment 5 includes a fourth optical fiber 9, does not include optical directional coupler 32, and includes an optical amplifier repeater 10C instead of optical amplifier repeater 10B.

Similarly to optical amplifier repeater 10, first optical fiber 6, and second optical fiber 7 according to Embodiment 1, optical amplifier repeater 10C, a third optical fiber 8, and fourth optical fiber 9 are constructed in a detection wire member 61.

Fourth optical fiber 9 has a first end EG and a second end EH. The direction from first end EG to second end EH may be described as a forward direction, and the direction from second end EH to first end EG may be described as a reverse direction.

Desirably, fourth optical fiber 9 has a low transmission loss and a large effective area so as to be able to transmit powerful light far away. See the description of Embodiment 1 for the illustration of an optical fiber having a large effective area.

The backscattered light is transmitted to second optical fiber 7. The second excitation light, emitted from excitation laser device 24, is transmitted to fourth optical fiber 9.

Optical directional coupler 31 is connected to first end EC of second optical fiber 7, a wavelength filter 28, and optical directional coupler 30. Optical directional coupler 31 sends to wavelength filter 28 the backscattered light transmitted through second optical fiber 7 in the reverse direction. Optical directional coupler 31 sends to wavelength filter 28 the backscattered light occurred at a portion 6a of first optical fiber 6, transmitted through portion 6a in the reverse direction, and sent through optical directional coupler 30.

Optical amplifier repeater 10C includes an optical directional coupler 121 and an optical fiber 123, in addition to the configuration of optical amplifier repeater 10B according to Embodiment 4.

Optical directional coupler 121 sends a portion of the second excitation light, transmitted from first end EG of fourth optical fiber 9 in the forward direction, to second Erbium-doped fiber 4 via optical fiber 123, and sends the remainder of the second excitation light in the direction to second end EH of fourth optical fiber 9. The amplification of the backscattered light can be adjusted by adjusting a light branching ratio between optical directional couplers 121 in multiple optical amplifier repeaters 10C. For example, optical directional coupler 121 in optical amplifier repeater 10C closer to first end EG of fourth optical fiber 9 may send a smaller proportion of the input second excitation light to second Erbium-doped fiber 4, and optical directional coupler 121 in optical amplifier repeater 10C closer to second end EH of fourth optical fiber 9 may send a larger proportion of the input second excitation light to second Erbium-doped fiber 4.

While Fig. 12 illustrates fourth optical fiber 9 as singular, fourth optical fiber 9 may be plural, similarly to third optical fiber 8. If fourth optical fibers 9 are respectively connected to the respective amplifier repeaters 10C, the attenuation of the excitation light at the respective fourth optical fiber 9 is small, and the sensing accuracy is high. For details, see the description where third optical fiber 8 is plural.

### <Embodiment 6>

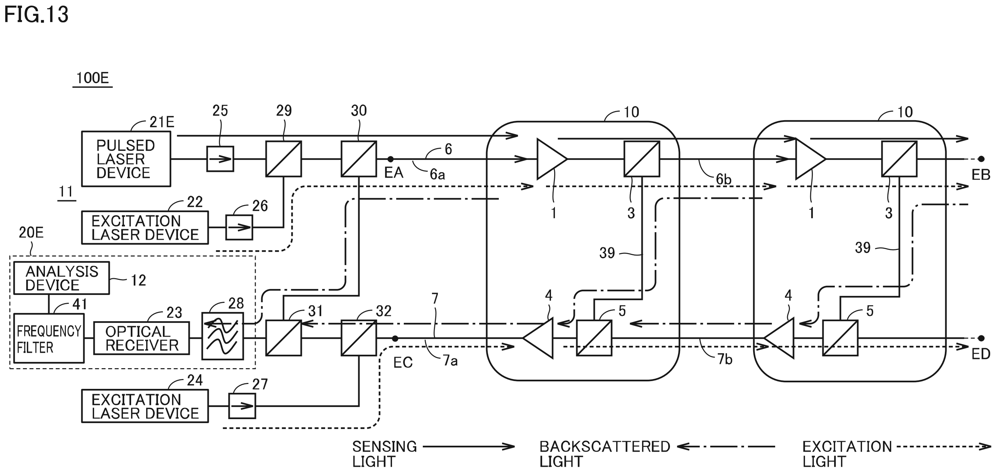

Referring to Fig. 13, a power cable anomalous point detection system 100E according to Embodiment 6 is now described. Anomalous-point detection system 100E according to Embodiment 6 differs from anomalous-point detection system 100 according to Embodiment 1 in that the anomalous-point detection system 100E according to Embodiment 6 includes a pulsed laser device 21E instead of pulsed laser device 21, and a measurement device 20E instead of measurement device 20.

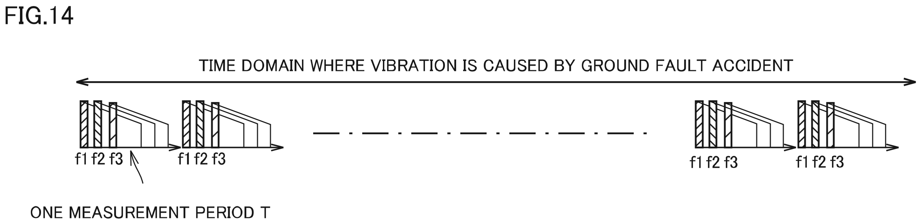

Pulsed laser device 21E can emit multiple frequency-modulated sensing light beams having a constant wavelength. For example, pulsed laser device 21E emits sensing light beams having a wavelength of 1560 nm. Within one measurement period T (a defined time), pulsed laser device 21E sequentially emits sensing light beams modulated at multiple frequencies (f1 to fn), as shown in Fig. 14.

In the event of a ground fault accident, desirably, the optical fiber detects a fault point within about 100 milliseconds after the accident. For example, where one measurement period T is five milliseconds, the measurement (100 milliseconds) is performed 20 times for the above time. In order to detect a fault point, for example, with an accuracy of 100 m, an Δt interval of a pulse wave may be set to approximately 1.0 µsec (microseconds), provided that the speed of light is approximately 2 × 108 m/sec. The Δt interval is determined by dividing the required length of accuracy (here, 100 meters) by the speed of light and multiplying a resultant value by 2. The Δt interval of the pulse wave in one measurement period T is adjusted and multiple frequencies are used, i.e., a frequency is multiplexed, rather than employing a single frequency as a modulation frequency using the pulse wave in one measurement period T, thereby improving the S/N ratio of the signal to enhance the detection accuracy of a fault point.

Measurement device 20E includes a frequency filter 41, in addition to the configuration of measurement device 20 according to Embodiment 1.

Frequency filter 41 extracts multiple frequency components of the sensing light, emitted from pulsed laser device 21E, from the signal sent through optical receiver 23. Frequency filter 41 sequentially detects, at Δt intervals within one measurement period T, components of the multiple frequencies fi (i = 1 to n) among those of the backscattered light.

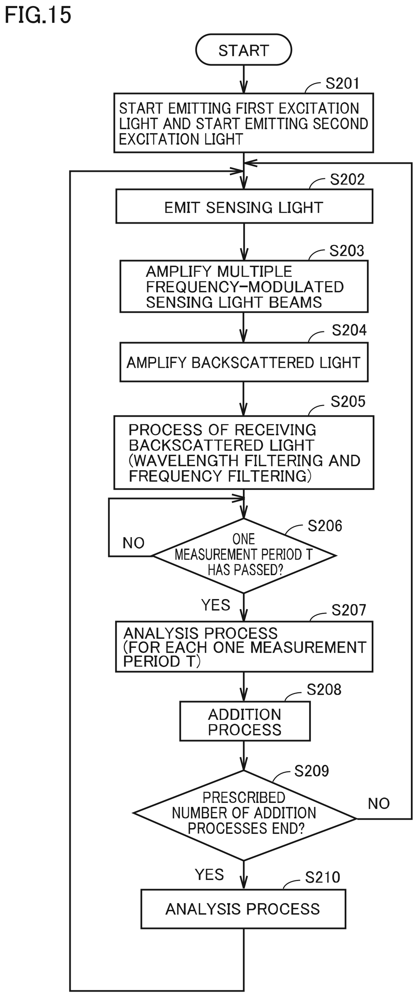

Referring to Fig. 15, an anomalous-point detection procedure for a power cable according to Embodiment 6 is now described.

In step S201, an excitation laser device 22 starts emitting first excitation light, and an excitation laser device 24 starts emitting second excitation light. The timing of the start of emission of the first excitation light and the timing of the start of emission of the second excitation light may be coincident. The first excitation light transmits through a first optical fiber 6. The second excitation light transmits through a second optical fiber 7.

In step S202, pulsed laser device 21E emits multiple frequency-modulated sensing light beams (pulsed light beams). In other words, pulsed laser device 21E sequentially emits, at Δt intervals in one measurement period T (within a defined time), sensing light beams modulated at frequencies of fi (i = 1 to n). The sensing light beams transmit through first optical fiber 6.

In step S203, an optical amplifier repeater 10 amplifies the sensing light with the first excitation light. The backscattered light transmits through first optical fiber 6 in the reverse direction and enters optical amplifier repeater 10.

In step S204, optical amplifier repeater 10 amplifies the backscattered light with the second excitation light and sends the amplified backscattered light to second optical fiber 7. The backscattered light transmits through second optical fiber 7 in the reverse direction, and is amplified with the second excitation light at the midway optical amplifier repeater 10, and input to measurement device 20E. In the event of an anomaly at a power cable 50, the physical quantities (a strength, a phase, etc.) of the backscattered light vary (attenuate for strength). Thus, measurement device 20E is allowed to know the occurrence of the anomaly and where the anomaly occurred by knowing the presence or absence of the variation in physical quantities.

In step S205, measurement device 20E performs a process of receiving the backscattered light. In other words, wavelength filter 28 sends to optical receiver 23 the backscattered light of the light sent through optical directional coupler 31. Optical receiver 23 converts the light sent through wavelength filter 28 into an electrical signal and sends the electrical signal to frequency filter 41. Frequency filter 41 detects the frequency components fi (i = 1 to n) among those of the backscattered light. The output of frequency filter 41 is sent to analysis device 12.

In step S206, if one measurement period T has passed since the previous emission of the sensing light (pulsed light) modulated with the frequency fi, the process proceeds to step S207. Similarly to Embodiment 1, the one measurement period T may be set to be greater than or equal to a time gap between the time the sensing light, modulated with the frequency of fi, is emitted from pulsed laser device 21 and the time the optical receiver 23 receives the backscattered light occurred at second end EB of first optical fiber 6 due to the sensing light modulated with the frequency of fi. Measurement device 20 continues to receive the backscattered light within the one measurement period T. A measurement time T for the backscattered light having the frequency fi starts at a moment of the emission of the sensing light (pulsed light) modulated with the frequency fi. As measurement time T for fn ends, the process proceeds to step S207. While measurement times for multiple frequencies overlap, the frequency components for f1 to fn can be detected by including n frequency filters 41.

Alternatively, unlike the one measurement period T of step S202, the one measurement period T of step S206 may be set to be greater than or equal to a time gap between the time the sensing light, modulated with the frequency of f1, is emitted from pulsed laser device 21 and the time the optical receiver 23 receives the backscattered light occurred at second end EB of first optical fiber 6 due to the sensing light modulated with the frequency of fn.

In step S207, analysis device 12 determines physical quantities from the backscattered light sent through the output of frequency filter 41. Using the determined physical quantities (hereinafter, called most recent physical quantities), analysis device 12 detects the presence or absence of an anomaly.

The presence or absence of an anomaly may be detected by comparing the most recent physical quantities with one or more thresholds, for example. The one or more thresholds are values according to respective positions at power cable 50, and, for example, if there is no anomaly at power cable 50, set depending on physical quantities of the backscattered light which are calculated according to a transmission distance. The physical quantities determined for each one measurement period T may be accumulated and the accumulated information may be utilized. The accumulated information indicates trends in past and the use of the accumulated information facilitates a reduction of the effect of noise. For example, analysis device 12 may compare the difference between the most recent physical quantities and the immediately preceding physical quantities with preset thresholds. Instead of the immediately preceding physical quantities, an average of retrospective physical quantities for a period of time may be used. Instead of the average, a variance in physical quantities for a period of time may be compared with or used as thresholds. This analysis process allows detection of the presence or absence of an anomaly that can possibly occur in a short period of time.

In step S208, analysis device 12 adds up physical quantities (the strength, the phase difference, the phase change, etc. of the backscattered light) of signals transmitted through the output of frequency filter 41.

In step S209, each time the addition process ends for a prescribed number of times, the process proceeds to step S210. Otherwise, the process returns to step S202. The added values are always stored and saved.

In step S210, analysis device 12 uses the added values (hereinafter, called the most recent added values), including the most recent physical quantities, and the past added values to detect the presence or absence of an anomaly again. For example, analysis device 12 compares a difference between the average of the past added values and the average of the most recent added values with a preset threshold. The average of the added values is calculated by, for example, dividing the added values by the prescribed number of times. Instead of the average, the variance in added values may be compared with or used as a threshold. The variance indicates a variation in signals caused by noise. Use of the accumulated information, such as the average of the past added values, facilitates a further reduction of the effect of noise. This analysis process allows detection of the presence or absence of an anomaly that can possibly develop for a long term (such as a minute distortion or change in phase, etc. held for a long period of time). In other words, the occurrence of an external damage or a permanent damage such as a fatigue to power cable 50 can also be sensed. Subsequently, the added values are reset, and the process returns to step S202.

In the present embodiment, multiplexing (f1 to fn) of the frequency of the sensing light can increase the number of data items that can be obtained in one measurement period to n data items. Determining an average of a large number of data items allows accurate detection of an anomalous point in a short time. In the present embodiment, during one round trip time (e.g., five milliseconds), the measurement is allowed to be performed n times, allowing an accidental event to be captured within 100 milliseconds.

Note that the time of the accident may be synchronously acquired based on the trip information to analyze the measurement data before and after the time of the accident at short time intervals. This allows a point of change of the signal to be accurately detected in a short time, thereby enhancing the detection accuracy of a fault point.

The presently disclosed embodiments should be considered in all aspects illustrative and not restrictive. The scope of the present invention is defined by the appended claims, rather than by the embodiments described above, and all changes which come within the meaning and range of equivalency of the appended claims are intended to be included within the scope of the present invention.

### REFERENCE SIGNS LIST

1 first Erbium-doped fiber; 25, 26, 27 opto-isolator; 3, 5, 29, 30, 31, 31D, 32, 32D, 120, 121 optical directional coupler; 4 second Erbium-doped fiber; 6 first optical fiber; 6a, 6b portion of first optical fiber; 7 second optical fiber; 7a portion of second optical fiber; 8 third optical fiber; 9 fourth optical fiber; 10, 10B, 10C, 70 optical amplifier repeater; 11, 11A excitation device; 12 analysis device; 20, 20E measurement device; 21, 21E pulsed laser device; 22, 24, 24A excitation laser device; 23 optical receiver; 28 wavelength filter; 38 branched structure; 39 branching optical fiber; 41 frequency filter; 50, 50A power cable; 51, 51A, 51B conductor; 52 inner semiconductive layer; 53, 53A, 53B insulating layer; 54, 54A, 54B outer semiconductive layer; 55, 64 sheath; 57A, 57B shielding layer; 58a, 58b line; 59 armor; 60 cable body; 61, 61A detection wire member; 62 jelly compound; 63, 94 metal tube; 66 housing; 80 connection; 92 protective layer; 97 semiconductive portion; 98 insulation; 99 sleeve; 100, 100A, 100B, 100C, 100D, 100E anomalous-point detection system; 122, 123 optical fiber; EA, EC, EE, EG first end; EB, ED, EF, EH second end; and ND1X, ND1Y, ND2X, ND2Y connection point.

## Claims

1. A power cable comprising:
a cable body including a conductor, an insulating layer, a semiconductive layer, and a sheath;
a first optical fiber that transmits sensing light;
a second optical fiber that transmits backscattered light of the sensing light;
an optical fiber that transmits first excitation light for amplifying the sensing light;
an optical fiber that transmits second excitation light for amplifying the backscattered light; and
at least one optical amplifier repeater that amplifies the sensing light with the first excitation light, and amplifies the backscattered light with the second excitation light.

2. The power cable according to claim 1, wherein
the optical fiber that transmits the first excitation light is the first optical fiber.

3. The power cable according to claim 1 or 2, wherein
the optical fiber that transmits the second excitation light is the second optical fiber.

4. The power cable according to any one of claims 1 to 3, wherein
the optical amplifier repeater includes a branched structure which guides the backscattered light, originated from the first optical fiber, to the second optical fiber.

5. The power cable according to any one of claims 1 to 4, wherein
the cable body is disposed at a center of the power cable,
the power cable includes a plurality of lines and at least one metal tube on an outer side of the cable body, and
the metal tube accommodates the first optical fiber, the second optical fiber, and the optical amplifier repeater.

6. The power cable according to claim 5, further comprising
an armor on an outer periphery of the cable body, wherein
the armor is configured of the plurality of lines and a detection wire member,
the detection wire member accommodates the metal tube, and
an outer diameter of the detection wire member is equal to an outer diameter of a line adjacent to the detection wire member, among the plurality of lines.

7. The power cable according to any one of claims 1 to 6, wherein
the sensing light transmits through the first optical fiber in a direction from a first end to a second end, and the backscattered light transmits through the second optical fiber in a direction from a second end to a first end, wherein
the optical amplifier repeater includes:
a first Erbium-doped fiber that amplifies the sensing light, transmitted from a direction of the first end of the first optical fiber, with the first excitation light;
a branching optical fiber;
a first optical directional coupler that sends the sensing light amplified by the first Erbium-doped fiber in a direction to the second end of the first optical fiber, and sends the backscattered light, transmitted from a direction of the second end of the first optical fiber, to the branching optical fiber;
a second Erbium-doped fiber; and
a second optical directional coupler that sends, to the second Erbium-doped fiber, the backscattered light transmitted through the branching optical fiber, and the backscattered light transmitted from a direction of the second end of the second optical fiber, wherein
the second Erbium-doped fiber amplifies the backscattered light, transmitted through the second optical directional coupler, with the second excitation light, and sends the amplified backscattered light in a direction to the first end of the second optical fiber.

8. The power cable according to any one of claims 1 to 7, further comprising
one or more third optical fibers that transmit the first excitation light, the one or more third optical fibers being independent of the first optical fiber.

9. The power cable according to any one of claims 1 to 8, further comprising
one or more fourth optical fibers that transmit the second excitation light, the one or more fourth optical fibers being independent of the second optical fiber.

10. The power cable according to claim 7, further comprising
one or more third optical fibers that transmit the first excitation light, the one or more third optical fibers being independent of the first optical fiber, wherein
the first excitation light transmits through the third optical fiber in a direction from a first end to a second end,
the optical amplifier repeater further includes a third optical directional coupler that sends, to the first Erbium-doped fiber, a portion of the first excitation light transmitted from the first end of the third optical fiber, and sends a remainder of the first excitation light in a direction to the second end of the third optical fiber.

11. The power cable according to claim 7 or 10, further comprising
one or more fourth optical fibers that transmit the second excitation light, the one or more fourth optical fibers being independent of the second optical fiber, wherein
the second excitation light transmits through the fourth optical fiber in a direction from a first end to a second end, and
the optical amplifier repeater further includes a fourth optical directional coupler that sends a portion of the second excitation light, transmitted from the first end of the fourth optical fiber, to the second Erbium-doped fiber and sends a remainder of the second excitation light in a direction to the second end of the fourth optical fiber.

12. A power line, comprising:
a first power cable;
a second power cable; and
a connection connecting the first power cable and the second power cable, wherein
each of the first power cable and the second power cable includes:
a cable body including a conductor, an insulating layer, a semiconductive layer, and a sheath;
a first optical fiber that transmits sensing light;
a second optical fiber that transmits backscattered light of the sensing light;
an optical fiber that transmits first excitation light for amplifying the sensing light; and
an optical fiber that transmits second excitation light for amplifying the backscattered light, wherein
the connection includes an optical amplifier repeater that amplifies the sensing light with the first excitation light, and amplifies the backscattered light with the second excitation light.

13. A power cable anomalous point detection system, comprising:
a power cable including:
a cable body including a conductor, an insulating layer, a semiconductive layer, and a sheath;
a first optical fiber that transmits sensing light;
a second optical fiber that transmits backscattered light of the sensing light;
an optical fiber that transmits first excitation light for amplifying the sensing light; and
an optical fiber that transmits second excitation light for amplifying the backscattered light;
a laser device that emits the sensing light;
an excitation device that emits the first excitation light and the second excitation light;
an optical amplifier repeater that amplifies the sensing light with the first excitation light, and amplifies the backscattered light with the second excitation light; and
a measurement device that detects an anomalous point at the power cable, based on the backscattered light.

14. The power cable anomalous point detection system according to claim 13, wherein
the second excitation light transmits through the second optical fiber, and
the excitation device emits the second excitation light having a shorter wavelength than the sensing light.

15. The power cable anomalous point detection system according to claim 13 or 14, wherein
during a defined time, the laser device sequentially emits sensing light beams modulated at a plurality of frequencies, and
the measurement device includes a frequency filter that detects components of the plurality of frequencies among frequency components of the backscattered light.

16. The power cable anomalous point detection system according to any one of claims 13 to 15, wherein
the measurement device includes a wavelength filter that cuts out the first excitation light and the second excitation light to detect a wavelength of the sensing light emitted from the laser device.

17. A method of detection of an anomalous point at a power cable,
the power cable including:
a cable body including a conductor, an insulating layer, a semiconductive layer, and a sheath;
a first optical fiber that transmits sensing light; and
a second optical fiber that transmits backscattered light of the sensing light, wherein
the power cable includes an optical fiber that transmits first excitation light for amplifying the sensing light, and an optical fiber that transmits second excitation light for amplifying the backscattered light,
the method comprising:
emitting, by an excitation device, the first excitation light and the second excitation light;
emitting, by a first laser device, the sensing light;
amplifying, by an optical amplifier repeater, the sensing light with the first excitation light;
amplifying, by the optical amplifier repeater, the backscattered light with the second excitation light; and
detecting, by a measurement device, the anomalous point at the power cable using the backscattered light.
